# EUROPEAN PATENT APPLICATION

(11) **EP 4 410 482 A1**
(43) Date of publication of application: **07.08.2024**
(21) Application number: 23201677.4
(22) Date of filing: 04.10.2023
(51) Int. Cl.: B25B 7/02

(54) **PLIERS**

(30) Priority: 24.10.2022 US 202263380626 P; 11.09.2023 US 202318464873
(71) Applicant: Milwaukee Electric Tool Corporation, Brookfield, WI 53005 (US)
(72) Inventor: BABINEC, Jedidiah J., Milwaukee, 53220 (US)
(74) Representative: Barker Brettell LLP

(57) **Abstract**

Pliers include two plier members connected through a pivot that allows the upper handle to move a lower jaw and a lower handle to move an upper jaw about the pivot. The upper jaw and lower jaw together define a head of the pliers. The pliers include one or more striking surfaces located at the head.

## Description

### CROSS-REFERENCE TO RELATED PATENT APPLICATION

The present application claims the benefit of and priority to U.S. Provisional Application No. 63/380,626 filed on October 24, 2022, which is incorporated herein by reference in its entirety.

### BACKGROUND OF THE INVENTION

The present invention relates generally to the field of tools. The present invention relates specifically to a hand tool that is usable as a striking tool and more specifically to gripping hand tools, such as pliers with a striking surface. Pliers typically include two plier members/components connected through a pivot that allows the upper handle to move a lower jaw and a lower handle to move an upper jaw about the pivot. Pliers with a striking surface on the upper jaw and/or lower jaw allow for pliers to be used to strike an object such as a nail.

### SUMMARY OF THE INVENTION

One embodiment of the invention relates to pliers including a first jaw, a lower handle, a second jaw, and an upper handle. The first jaw includes as first plurality of ridges at a distal end of the first jaw and a first blade. The lower handle is coupled to the first jaw. The lower handle extends along a length of the pliers. The second jaw is pivotally coupled to the first jaw and rotatable about a rotational axis. The second jaw and the first jaw together define a head. The second jaw includes a second plurality of ridges at a distal end of the second jaw. The first plurality of ridges and the second plurality of ridges together define a gripping portion. The second jaw further includes a second blade. The first blade and the second blade together define a cutting portion. The upper handle is coupled to the second jaw. The head includes a striking surface that extends along the length of the pliers.

Another embodiment of the invention relates to pliers including a first member and a second member. The first member extends along a longitudinal axis and includes an upper jaw. The upper jaw includes a first plurality of teeth at a distal end of the upper jaw and an upper blade. The first member further includes a lower handle and a first neck positioned between a distal portion of the lower handle and the upper jaw. The second member is pivotally coupled to the first member and rotatable about a pivot axis. The second member includes a lower jaw, the upper jaw and lower jaw together define a head. The lower jaw includes a second plurality of teeth at a distal end of the lower jaw. The first plurality of teeth and the second plurality of teeth together define a gripping portion. The second member further includes a lower blade and an upper handle coupled to the lower jaw. The upper blade and the lower blade together define a cutting portion. The second member includes a second neck portion positioned between a distal portion of the upper handle and the lower jaw, the second neck portion crosses over the first neck portion to define a neck. The head includes a first striking surface that extends along the longitudinal axis and the first striking surface is an angled, upward facing surface.

Another embodiment of the invention relates to pliers including a first jaw, a lower handle, a second jaw, and an upper handle. The first jaw includes as first plurality of ridges at a distal end of the first jaw and a first blade. The lower handle is coupled to the first jaw and extends along a length of the pliers. The second jaw is pivotally coupled to the first jaw and rotatable about a pivot axis. The second jaw includes a second plurality of ridges at a distal end of the second jaw. The first plurality of ridges and the second plurality of ridges together define a gripping portion. The second jaw further includes a second blade. The first blade and the second blade together define a head. The head includes a first striking surface on the first jaw and a second striking surface on the second jaw.

In various embodiments, the striking surface extends in a parallel orientation relative to a longitudinal axis of the pliers. In various embodiments, the striking surface extends in an angled orientation relative to a longitudinal axis of the pliers. In a specific embodiment, the pliers include a second striking surface. In such an embodiment, the first striking surface extends in a parallel orientation relative to the longitudinal axis of the pliers and the second striking surface extends in an angled orientation relative to the longitudinal axis of the pliers.

Additional features and advantages will be set forth in the detailed description which follows, and, in part, will be readily apparent to those skilled in the art from the description or recognized by practicing the embodiments as described in the written description included, as well as the appended drawings. It is to be understood that both the foregoing general description and the following detailed description are exemplary.

The accompanying drawings are included to provide further understanding and are incorporated in and constitute a part of this specification. The drawings illustrate one or more embodiments and, together with the description, serve to explain principles and operation of the various embodiments.

### BRIEF DESCRIPTION OF THE DRAWINGS

This application will become more fully understood from the following detailed description, taken in conjunction with the accompanying figures, wherein like reference numerals refer to like elements in which:
FIG. 1 is a perspective view of pliers with a striking surface, according to an exemplary embodiment.
FIG. 2 is a detailed perspective view of a head of the pliers of FIG. 1, according to an exemplary embodiment.
FIG. 3 is a perspective view of pliers with a striking surface, according to another exemplary embodiment.
FIG. 4 is a detailed perspective view of the head of the pliers of FIG. 3, according to an exemplary embodiment.
FIG. 5 is a perspective view of pliers with a striking surface, according to another exemplary embodiment.
FIG. 6 is a detailed perspective view of the head of the pliers of FIG. 5, according to an exemplary embodiment.

### DETAILED DESCRIPTION

Referring generally to the figures, various embodiments of a hand tool, such as a gripping hand tool, shown as a pliers, are shown. Various embodiments of the pliers discussed herein include an innovative head design with a striking surface on the head of the pliers. As will be generally understood, pliers include handles to open and/or close jaws formed at the head with the jaws pivoting about a pivot point. The head or jaws can be used to grip a fastener, wire, or any suitable material and/or to pull staples, nails, etc. Another portion of the jaws include a cutting surface configured to cut through materials such as wire (hard wire, soft wire, Aluminum conductor steel-reinforced cable ("ACSR"), etc.).

As discussed herein, the head of the pliers and specifically the upper and/or lower jaw of the pliers includes one or more striking surface(s). When the pliers are being used as a striking tool, the striking surface(s) interface against an object being struck (e.g., a nail, staple, etc.). Combining the functionality of pliers (gripping, cutting, etc.) with a striking surface in a single tool reduces the number of tools a worker needs to carry and/or interact with, thereby increasing the efficiency of the worker. The combined functionality is useful for electricians, utility workers and/or lineman who work in environments where it may be difficult to carry around a heavy hammer and/or a large number of tools.

As will be generally understood, workers may utilize pliers with outer jaw/head surfaces not designed for striking as striking tools for convenience. However, because the pliers outer jaw/head surface is not designed for striking, this misuse may damage the pliers such that gripping tool function of the pliers is impaired and the functional life of the pliers is reduced. In various embodiments discussed herein, the striking surface designs are specifically designed, shaped and positioned to improve striking performance, as compared to pliers with outer jaw/head surfaces not designed for striking. Specifically, in various embodiments, the striking surface includes shape, size, hardness, etc. designed for striking.

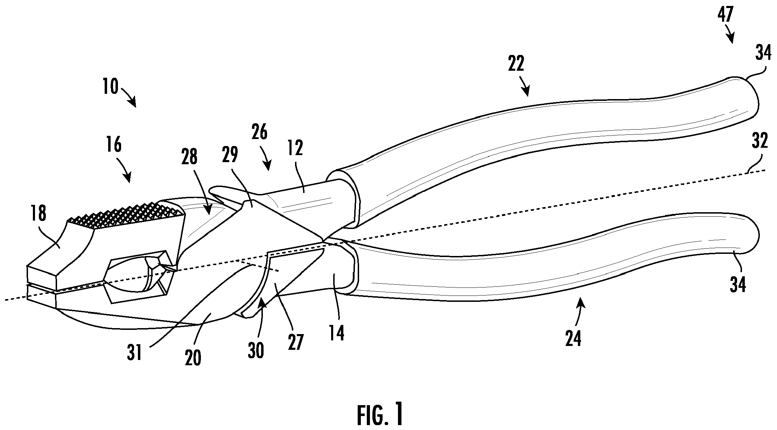

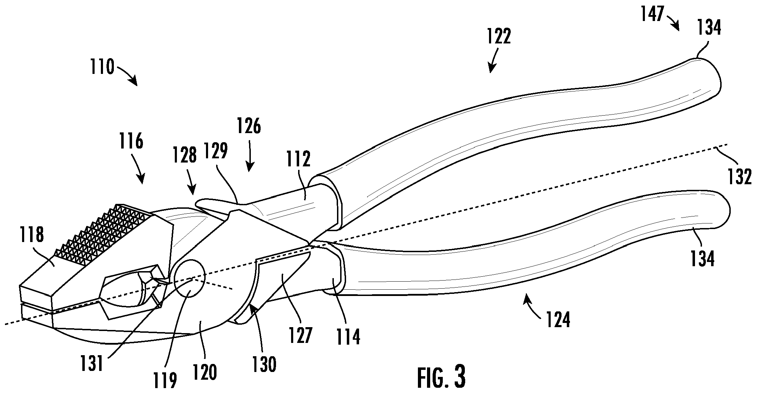

Referring to FIG. 1, various aspects of a hand tool, shown as pliers 10, are shown. Although the hand tool is described herein as pliers 10, the tool can be used to cut objects such as wires (hard and/or soft), cables, nails, etc. Pliers 10 include a first member 12 and a second member 14 that is pivotally coupled and/or connected to first member 12 at a pivot point or pivot axis, shown as rotational axis 31. The pivotal coupling between first member 12 and second member 14 allows the members 12, 14 to pivot relative to each other to grip and/or cut a workpiece. First member 12 and second member 14 are coupled together by a pin and/or rivet (see e.g., 119 in FIG. 3).

Pliers 10 and specifically first member 12 and second member 14 include a first or upper jaw 18 coupled to a lower handle 24 and a second or lower jaw 20 coupled to an upper handle 22. Upper jaw 18 and lower jaw 20 together form a head 16 of pliers 10. In a specific embodiment, lower handle 24 and upper jaw 18 and/or upper handle 22 and lower jaw 20 are formed from single, integral and/or continuous pieces of material. Pliers 10 include a neck 26 positioned between head 16 and the handles 22, 24.

In a specific embodiment, second member 14 and/or lower handle 24 includes a neck portion 27 positioned between a distal portion of the lower handle 24 and upper jaw 18. Neck portion 27 includes a recessed portion 30 (i.e., reduced width and/or depth compared to distal portion of lower handle 24 and/or upper jaw 18). Recessed portion 30 is positioned at a proximal end of lower handle 24 adjacent to head 16. In a specific embodiment, first member 12 and/or upper handle 22 includes a neck portion 29 positioned between a distal portion of the upper handle 22 and lower jaw 20. Neck portion 29 includes a recessed portion 28 (i.e., reduced width and/or depth compared to distal portion of upper handle 22 and/or lower jaw 20).

Recessed portion 28 is positioned at a proximal end of upper handle 22 adjacent to head 16. Recessed portion 30 of second member 14 is configured to receive and/or engage a portion of first member 12 when pliers 10 are assembled. Similarly, recessed portion 28 of first member 12 is configured to receive and/or engage a portion of second member 14 when pliers 10 are assembled. In other words, when pliers 10 are assembled, neck 26 is formed by neck portion 27 and neck portion 29 crossing over each other such that upper handle 22 is connected to lower jaw 20 and lower handle 24 is connected to upper jaw 18.

In a specific embodiment, upper handle 22 and/or lower handle 24 are covered with a grip 34 material. In a specific embodiment, grip 34 is formed from rubber. In other embodiments, grip 34 is formed from a thermoplastic elastomer (e.g., thermoplastic vulcanizates (TPVs), thermoplastic styrenic elastomers (TPS), etc.). In a specific embodiment, grips 34 are formed using dip molding. Grips 34 provide durability to the handles 22, 24, increase user comfort, and reduce slippage of the user's hands on pliers 10.

A longitudinal axis 32 of pliers 10 extends between upper handle 22 and lower handle 24 and between upper jaw 18 and lower jaw 20. Longitudinal axis 32 is generally perpendicular (e.g., 90 degrees plus or minus 10 degrees) to rotational axis 31. In order to grip and/or cut a workpiece, a user places the workpiece and/or material between upper jaw 18 and lower jaw 20. When a user pushes and/or squeezes upper handle 22 and lower handle 24 in an inward direction (i.e., toward longitudinal axis 32) upper jaw 18 will move toward lower jaw 20.

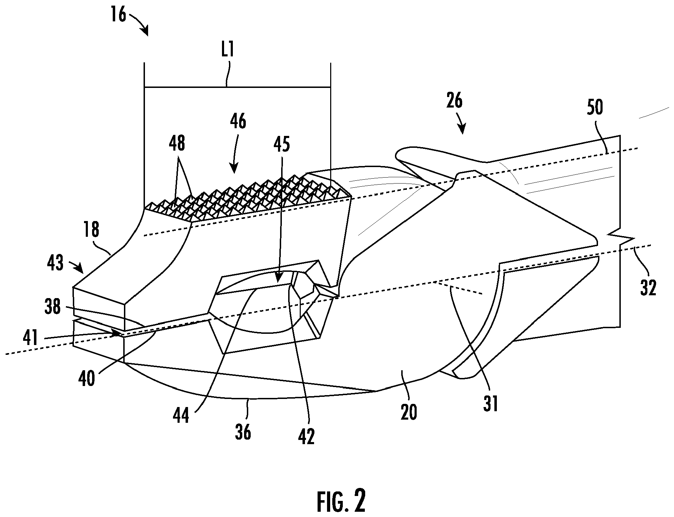

Referring to FIG. 2, a detailed perspective view of head 16 of pliers 10 is shown, according to an exemplary embodiment. Upper jaw 18 includes ridges or teeth 38 on an inward facing (i.e., facing in direction of longitudinal axis 32 and/or lower jaw 20) surface. Similarly, lower jaw 20 includes ridges or teeth 40 on an inward facing (i.e., facing in direction of longitudinal axis 32 and/or upper jaw 18) surface. Teeth 38 of upper jaw 18 and teeth 40 of lower jaw 20 together define a gripping portion 41 at a first end or nose 43 of the pliers. Nose 43 is at a distal end of pliers 10 that opposes a second or gripping end 47 (see e.g., FIG. 1) of pliers 10 defined by the upper handle 22 and lower handle 24.

Upper jaw 18 further includes a cutting edge or blade 42 and lower jaw 20 includes a cutting edge or blade 44 that opposes blade 42. Blade 42 of upper jaw 18 and blade 44 of lower jaw 20 together define a cutting portion 45 of pliers 10. Cutting portion 45 is positioned between nose 43 and second end 47 of pliers 10. More specifically, cutting portion 45 is positioned between gripping portion 41 and neck 26. Lower jaw 20 further includes a reaming surface 36 that opposes the inward facing surface that teeth 40 are positioned on. Reaming surface 36 allows a user to ream a pipe to remove burrs or otherwise smooth the inside of a pipe wall along a cut of the pipe. To use the pliers 10 as a reamer, the user inserts the nose 43 of the pliers 10 into a pipe, until the pipe wall contacts the reaming surface 36 and the user rotates the pipe or pliers 10 so that the reaming surface 36 removes burrs and/or smooths the pipe wall along the cut.

As discussed above, Applicant believes including a striking surface on upper jaw 18 and/or lower jaw 20 allows for improved efficiency for workers. Pliers 10 include a striking surface 46 on an upward facing surface (i.e., facing away from longitudinal axis 32 and lower jaw 20 and on the opposite side as teeth 38) of upper jaw 18. Striking surface 46 is configured to engage or strike objects such as nails, staples, etc. Striking surface 46 includes a plurality of projections or protrusions 48 extending outward (i.e., away from upper jaw 18) from upper jaw 18 and/or head 16. In other words, striking surface 46 has a surface texture, waffled pattern, and/or milled finish. The projections 48 and/or striking surface texture is configured to reduce wear on striking surface 46.

Striking surface 46 extends along a striking surface axis 50 and has a length. In a specific embodiment, striking surface 46 is generally parallel (i.e., parallel plus or minus 10 degrees) to a length of pliers 10. In other words, striking surface 46 extends in a generally parallel orientation to longitudinal axis 32 (i.e., striking surface axis 50 is parallel to longitudinal axis 32 plus or minus 10 degrees).

In a specific embodiment, striking surface 46 includes a length, L1, that is greater than a length of gripping portion 41 and/or cutting portion 45.

In a specific embodiment, striking surface 46 includes a texture, hardness, coating, etc. to increase durability of striking surface 46 and/or head 16 of pliers 10. In a specific embodiment, striking surface 46 is treated (i.e., heat treatment, coating, etc.) to increase durability of striking surface 46 and/or head 16 of pliers 10. In a specific embodiment, striking surface 46 has a first hardness or durometer and the remainder of head 16 has a second hardness or durometer. In a specific embodiment, the first hardness or durometer is greater than the second hardness or durometer.

Referring to FIGS. 3-4, various aspects of a hand tool, shown as pliers 110, are shown according to another exemplary embodiment. Pliers 110 are substantially the same as pliers 10 except for the differences discussed herein. Pliers 110 include a first member 112 and a second member 114 that is pivotally coupled and/or connected to first member 112 at a pivot point or pivot axis, shown as rotational axis 131. First member 112 and second member 114 are coupled together by a pin and/or rivet 119. Rotational axis 131 extends through pin 119.

Pliers 110 include a first or upper jaw 118 coupled to a lower handle 124 and a second or lower jaw 120 coupled to an upper handle 122. Upper jaw 118 and lower jaw 120 together form a head 116 of pliers 110. Pliers 110 include a neck 126 positioned between head 116 and the handles 122, 124.

In a specific embodiment, second member 114 and/or lower handle 124 includes a neck portion 127 positioned between a distal portion of the lower handle 124 and upper jaw 118. Neck portion 127 includes a recessed portion 130 (i.e., reduced width and/or depth compared to distal portion of lower handle 124 and/or upper jaw 118). In a specific embodiment, first member 112 and/or upper handle 122 includes a neck portion 129 positioned between a distal portion of the upper handle 122 and lower jaw 120. Neck portion 129 includes a recessed portion 128 (i.e., reduced width and/or depth compared to distal portion of upper handle 122 and/or lower jaw 120). When pliers 110 are assembled, neck 126 is formed by neck portion 127 and neck portion 129 crossing over each other such that upper handle 122 is connected to lower jaw 120 and lower handle 124 is connected to upper jaw 118.

In a specific embodiment, upper handle 122 and/or lower handle 124 are covered with a grip 134 material. A longitudinal axis 132 of pliers 110 extends between upper handle 122 and lower handle 124 and between upper jaw 118 and lower jaw 120. Longitudinal axis 132 is generally perpendicular (e.g., 90 degrees plus or minus 10 degrees) to rotational axis 131.

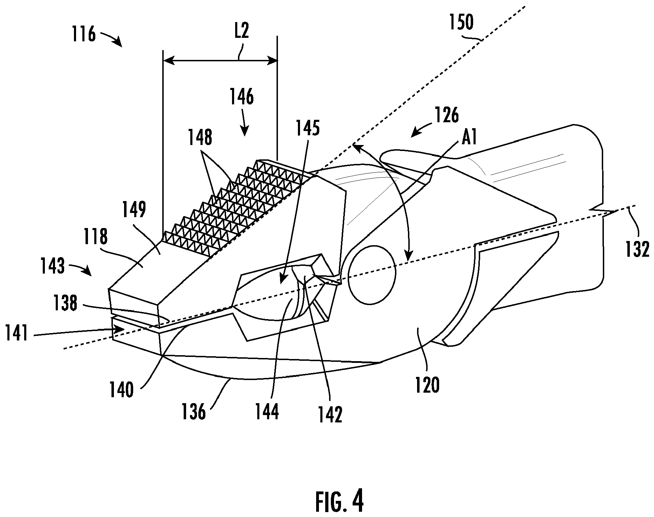

Referring to FIG. 4, a detailed perspective view of head 116 of pliers 110 is shown, according to an exemplary embodiment. Upper jaw 118 includes ridges or teeth 138 on an inward facing (i.e., facing in direction of longitudinal axis 132 and/or lower jaw 120) surface. Similarly, lower jaw 120 includes ridges or teeth 140 on an inward facing (i.e., facing in direction of longitudinal axis 132 and/or upper jaw 1118) surface. Teeth 138 of upper jaw 118 and teeth 140 of lower jaw 120 together define a gripping portion 141 at a first end or nose 143 of the pliers. Nose 143 is at the end of pliers 110 that opposes a second or gripping end 147 (see e.g., FIG. 3) of pliers 110 defined by the upper handle 122 and lower handle 124.

Upper jaw 118 further includes a cutting edge or blade 142 and lower jaw 120 includes a cutting edge or blade 144 that opposes blade 142. Blade 142 of upper jaw 118 and blade 144 of lower jaw 120 together define a cutting portion 145 of pliers 110. Cutting portion 145 is positioned between nose 143 and second end 147 of pliers 110 and more specifically between gripping portion 141 and neck 126. Lower jaw 120 further includes a reaming surface 136 that opposes the inward facing surface that teeth 140 are positioned on.

Pliers 110 include a striking surface 146 on an upward facing surface (i.e., away from longitudinal axis 132 and lower jaw 120 and on the opposite side as teeth 138) of upper jaw 118. Striking surface 146 is configured to engage or strike objects such as nails, staples, etc. Striking surface 146 includes a plurality of projections or protrusions 148 extending outward (i.e., away from upper jaw 118) from upper jaw 118. In other words, striking surface 146 has a surface texture and/or milled finish. In other embodiments, striking surface 146 includes a different finish (i.e., smooth, etc.). Upper jaw 118 further includes a smooth striking surface 149 at nose 143 (i.e., in front of striking surface 146).

In a specific embodiment, striking surface 146 is an angled, upward facing surface. Striking surface 146 extends along a striking surface axis 150 and includes a length. In a specific embodiment, striking surface 146 is angled relative to a length of pliers 110. In other words, striking surface 146 extends in an angled orientation relative to longitudinal axis 132 (i.e., striking surface axis 150 is angled relative to longitudinal axis 132).

An angle A1 is defined between striking surface 146 and longitudinal axis 132. An angle A1 is defined between striking surface 146 and longitudinal axis 132.

In a specific embodiment, striking surface 146 includes a length, L2, that is greater than a length of gripping portion 141 and/or cutting portion 145. In a specific embodiment, striking surface 146 includes a texture, hardness, coating, etc. to increase durability of striking surface 146 and/or head 116 of pliers 110.

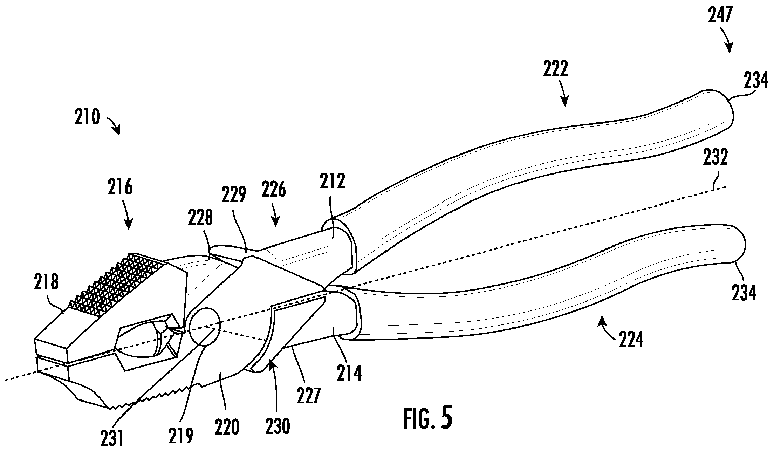

Referring to FIGS. 5-6, various aspects of a hand tool, shown as pliers 210, are shown according to another exemplary embodiment. Pliers 210 are substantially the same as pliers 10 and/or 210 except for the differences discussed herein. Pliers 210 include a first member 212 and a second member 214 that is pivotally coupled and/or connected to first member 212 at a pivot point or pivot axis, shown as rotational axis 231. First member 212 and second member 214 are coupled together by a pin and/or rivet 219. Rotational axis 231 extends through pin 219. In a specific embodiment, pin 219 is centered about rotational axis 231.

Pliers 210 include a first or upper jaw 218 coupled to a lower handle 224 and a second or lower jaw 220 coupled to an upper handle 222. Upper jaw 218 and lower jaw 220 together form a head 216 of pliers 210. Pliers 210 include a neck 226 positioned between head 216 and the handles 222, 224.

In a specific embodiment, second member 214 and/or lower handle 224 includes a neck portion 227 positioned between a distal portion of the lower handle 224 and upper jaw 218. Neck portion 227 includes a recessed portion 230 (i.e., reduced width and/or depth compared to distal portion of lower handle 224 and/or upper jaw 218). In a specific embodiment, first member 212 and/or upper handle 222 includes a neck portion 229 positioned between a distal portion of the upper handle 222 and lower jaw 220. Neck portion 229 includes a recessed portion 228 (i.e., reduced width and/or depth compared to distal portion of upper handle 222 and/or lower jaw 220). When pliers 210 are assembled, neck 226 is formed by neck portion 227 and neck portion 229 crossing over each other such that upper handle 222 is connected to lower jaw 220 and lower handle 224 is connected to upper jaw 218.

In a specific embodiment, upper handle 222 and/or lower handle 224 are covered with a grip 234 material. A longitudinal axis 232 of pliers 210 extends between upper handle 222 and lower handle 224 and between upper jaw 218 and lower jaw 220. Longitudinal axis 232 is generally perpendicular (e.g., 90 degrees plus or minus 10 degrees) to pivot axis 231.

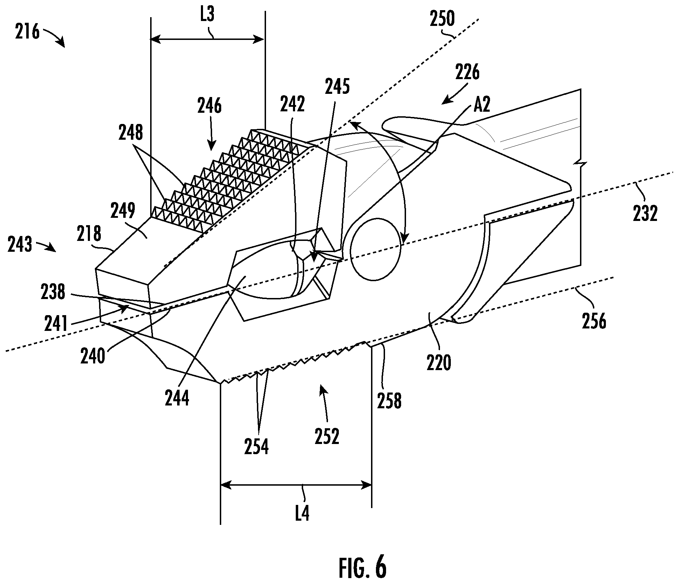

Referring to FIG. 6, a detailed perspective view of head 216 of pliers 210 is shown, according to an exemplary embodiment. Upper jaw 218 includes ridges or teeth 238 on an inward facing (i.e., facing in direction of longitudinal axis 232 and/or lower jaw 220) surface. Similarly, lower jaw 220 includes ridges or teeth 240 on an inward facing (i.e., in direction of longitudinal axis 232 and/or upper jaw 218) surface. Teeth 238 of upper jaw 218 and teeth 240 of lower jaw 220 together define a gripping portion 241 at a first end or nose 243 of the pliers 210. Nose 243 is at the end of pliers 210 that opposes a second or gripping end 247 (see e.g., FIG. 5) of pliers 210 defined by the upper handle 222 and lower handle 224.

Upper jaw 218 further includes a cutting edge or blade 242 and lower jaw 220 includes a cutting edge or blade 244 that opposes blade 242. Blade 242 of upper jaw 218 and blade 244 of lower jaw 220 together define a cutting portion 245 of pliers 210. Cutting portion 245 is positioned between nose 243 and second end 247 of pliers 210 and more specifically between gripping portion 241 and neck 226.

Pliers 210 include a striking surface 246 on an upward facing surface (i.e., facing away from longitudinal axis 232 and lower jaw 220 and on the opposite side as teeth 238) of upper jaw 218. Striking surface 246 is configured to engage or strike objects such as nails, staples, etc. Striking surface 246 includes a plurality of projections or protrusions 248 extending outward (i.e., away from upper jaw 218) from upper jaw 218. In other words, striking surface 246 has a surface texture and/or milled finish.

In a specific embodiment, striking surface 246 is an angled, upward facing surface. Striking surface 246 extends along a striking surface axis 250 and includes a length. In a specific embodiment, striking surface 246 is angled relative to a length of pliers 210. Upper jaw 218 further includes a smooth striking surface 249 at nose 243 (i.e., in front of striking surface 246). In other words, striking surface 246 extends in an angled orientation relative to longitudinal axis 232 (i.e., striking surface axis 250 is angled relative to longitudinal axis 232).

An angle A2 is defined between striking surface 246 and longitudinal axis 232. In a specific embodiment, striking surface 246 includes a length, L3, that is greater than a length of gripping portion 241 and/or cutting portion 245.

Pliers 210 include a second striking surface 252 on a downward facing surface 258 (i.e., away from longitudinal axis 232 and upper jaw 218 and on the opposite side as teeth 240) of lower jaw 220. Applicant believes, having varied striking surfaces on the upper and lower jaws allows for use of pliers 210 as a striking tool in a wider variety of environments (i.e., use flat or planar surface for more forceful striking and angled surface for use in small and/or tight environments, etc.). Second striking surface 252 is configured to engage or strike objects such as nails, staples, etc. Second striking surface 252 includes a plurality of projections or protrusions 254 extending outward (i.e., away from lower jaw 220) from the downward facing surface 258 of lower jaw 220. In other words, striking surface 252 has a surface texture and/or milled finish.

Second striking surface 252 extends along a second striking surface axis 256 and includes a length. In a specific embodiment, second striking surface 252 is parallel to a length of pliers 210. In other words, second striking surface 252 extends in a parallel orientation to longitudinal axis 232 (i.e., second striking surface axis 256 is parallel to longitudinal axis 232).

In a specific embodiment, second striking surface 252 includes a length, L4, that is greater than a length of gripping portion 241 and/or cutting portion 245. In a specific embodiment, L4 is greater than L3.

It should be understood that the figures illustrate the exemplary embodiments in detail, and it should be understood that the present application is not limited to the details or methodology set forth in the description or illustrated in the figures. It should also be understood that the terminology is for the purpose of description only and should not be regarded as limiting.

Further modifications and alternative embodiments of various aspects of the invention will be apparent to those skilled in the art in view of this description. Accordingly, this description is to be construed as illustrative only. The construction and arrangements, shown in the various exemplary embodiments, are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter described herein. Some elements shown as integrally formed may be constructed of multiple parts or elements, the position of elements may be reversed or otherwise varied, and the nature or number of discrete elements or positions may be altered or varied. The order or sequence of any process, logical algorithm, or method steps may be varied or re-sequenced according to alternative embodiments. Other substitutions, modifications, changes and omissions may also be made in the design, operating conditions and arrangement of the various exemplary embodiments without departing from the scope of the present invention.

For purposes of this disclosure, the term "coupled" means the joining of two components directly or indirectly to one another. Such joining may be stationary in nature or movable in nature. Such joining may be achieved with the two members and any additional intermediate members being integrally formed as a single unitary body with one another or with the two members or the two members and any additional member being attached to one another. Such joining may be permanent in nature or alternatively may be removable or releasable in nature.

While the current application recites particular combinations of features in the claims appended hereto, various embodiments of the invention relate to any combination of any of the features described herein whether or not such combination is currently claimed, and any such combination of features may be claimed in this or future applications. Any of the features, elements, or components of any of the exemplary embodiments discussed above may be used alone or in combination with any of the features, elements, or components of any of the other embodiments discussed above.

## Claims

1. A pliers comprising:
a first jaw comprising:
a first plurality of ridges at a distal end of the first jaw; and
a first blade;
a lower handle coupled to the first jaw, the lower handle extending along a length of the pliers;
a second jaw pivotally coupled to the first jaw and rotatable about a rotational axis, the second jaw and the first jaw together define a head, the second jaw comprising:
a second plurality of ridges at a distal end of the second jaw, wherein the first plurality of ridges and the second plurality of ridges together define a gripping portion; and
a second blade, wherein the first blade and the second blade together define a cutting portion; and
an upper handle coupled to the second jaw;
wherein the head comprises a striking surface that extends along the length of the pliers.

2. The pliers of claim 1, wherein the striking surface extends in a generally parallel orientation to the length of the pliers.

3. The pliers of claim 1, wherein the striking surface extends at an angled orientation relative to the length of the pliers.

4. The pliers of claim 1, wherein the gripping portion has a first length, and the striking surface has a second length, and wherein the first length is different than the second length.

5. The pliers of claim 4, wherein the second length is greater than the first length.

6. The pliers of claim 1, wherein the striking surface is positioned on the first jaw.

7. The pliers of claim 6, wherein the second jaw further comprises a reaming surface, the reaming surface positioned on a portion of the second jaw that opposes the second plurality of ridges.

8. The pliers of claim 1, wherein the striking surface is positioned on the second jaw.

9. The pliers of claim 1, wherein the striking surface includes a plurality of projections extending away from the head, such that the striking surface is textured.

10. A pliers comprising:
a first member extending along a longitudinal axis, the first member comprising:
an upper jaw comprising:
a first plurality of teeth at a distal end of the upper jaw; and
an upper blade;
a lower handle; and
a first neck portion positioned between a distal portion of the lower handle and the upper jaw; and
a second member pivotally coupled to the first member and rotatable about a pivot axis, the second member comprising:
a lower jaw, the upper jaw and the lower together define a head, the lower jaw comprising:
a second plurality of teeth at a distal end of the lower jaw, wherein the first plurality of teeth and the second plurality of teeth together define a gripping portion; and
a lower blade, wherein the upper blade and the lower blade together define a cutting portion;
an upper handle coupled to the lower jaw; and
a second neck portion positioned between a distal portion of the upper handle and the lower jaw, the second neck portion crossing over the first neck portion to define a neck;
wherein the head comprises a first striking surface, the first striking surface extends along the longitudinal axis and is an angled, upward facing surface.

11. The pliers of claim 10, the head further comprising a second striking surface extending along the longitudinal axis.

12. The pliers of claim 11, wherein the second striking surface extends in a generally parallel orientation to the longitudinal axis.

13. The pliers of claim 11, wherein the first striking surface is positioned on the upper jaw and the second striking surface is positioned on the lower jaw.

14. The pliers of claim 10, wherein the cutting portion is positioned between the gripping portion and the neck.

15. The pliers of claim 10, wherein the first member and the second member are each formed from a single, integral piece of material.

16. A pliers comprising:
a first jaw comprising:
a first plurality of ridges at a distal end of the first jaw; and
a first blade;
a lower handle coupled to the first jaw, the lower handle extending along a length of the pliers;
a second jaw pivotally coupled to the first jaw and rotatable about a pivot axis, the second jaw comprising:
a second plurality of ridges at a distal end of the second jaw, wherein the first plurality of ridges and the second plurality of ridges together define a gripping portion; and
a second blade, wherein the first blade and the second blade together define a cutting portion;
an upper handle coupled to the second jaw;
wherein the first jaw and second jaw together define a head, the head comprising:
a first striking surface on the first jaw; and
a second striking surface on the second jaw.

17. The pliers of claim 16, wherein the first striking surface extends along the length of the pliers and is positioned at an angle relative to the length of the pliers, and wherein second striking surface extends in a generally parallel orientation to the length of the pliers.

18. The pliers of claim 16, wherein the first striking surface has a first length and the second striking surface has a second length, and wherein the first length is different than the second length.

19. The pliers of claim 18, wherein the second length is greater than the first length.

20. The pliers of claim 18, wherein the second length is greater than a length of the gripping portion and wherein the second length is greater than a length of the cutting portion.
